# EUROPEAN PATENT APPLICATION

(11) **EP 4 603 261 A1**
(43) Date of publication of application: **20.08.2025**
(21) Application number: 24157857.4
(22) Date of filing: 15.02.2024
(51) Int. Cl.: B29C 65/10, B29K 101/12, B29K 105/04

(54) **DEVICE, KIT, AND METHOD FOR THERMALLY WELDING A MATERIAL**

(71) Applicant: Armacell Enterprise GmbH & Co. KG, 12529 Schönefeld OT Waltersdorf (DE)
(72) Inventor: GEISS, Daniel, 48308 Senden (DE); SCHUNCK, Nicolas, 48145 Münster (DE); TACKE, Andreas, 48163 Münster (DE)
(74) Representative: Vossius & Partner Patentanwälte Rechtsanwälte mbB

(57) **Abstract**

The present invention relates to a device (10) for thermally welding at least one thermally weldable material (12). The device (10) includes at least one heating device (26) configured to heat at least one gas and at least one applicator (22) configured to be inserted at least partially in at least one gap (14) between at least two adjacent sections (16, 18) of the material (12), during operation of the device (10). The applicator (22) includes at least one channel (40) for guiding the heated gas at least partially therethrough. The channel (40) is configured to discharge the heated gas at least partially into the gap (14) to at least partially melt at least one of the adjacent sections (16, 18) of the material (12), in a state in which the applicator (22) is inserted at least partially between the adjacent sections (16, 18) of the material (12).

The present invention further relates to a kit and a method.

## Description

### Background of the invention

Pipes are employed in a number of different environments and/or for a variety of purposes and/or applications, e.g., to transport different media, such as various types of liquids and/or gases. Pipes may be used in industrial applications, e.g., to transport liquids and/or gases to and/or from an industrial environment, such as a manufacturing environment. Pipes may also be employed in a civil and/or residential environment, e.g., for providing cooling and/or heating, for instance, in an atmosphere within a building. Besides transporting gases and liquids, pipes may also be used to transport solid, or at least partially solid, goods, such as granulates and/or powder.

It is known to at least partially cover the respective pipes with at least one material for various reasons, primarily to thermally insulate the pipes. To install the material, the material may include a gap, e.g., a slit, which may extend along a longitudinal axis of a pre-installed pipe, in particular through which the pipe may pass as the material is placed over the respective pipe. This allows the material to be placed relatively easily over the pipe. Once the material is in place, the gap is often at least partially closed/reclosed, e.g., by joining/rejoining adjacent sections of the material along the gap. Alternatively, or additionally, a plurality of foam-tubes may be placed onto a pipe, e.g., like sleeves, in particular, before and/or after the pipe is installed. Adjacent foam-tubes may have a gap between each other which may be closed by connecting the foam-tubes with each other, e.g., by joining adjacent sections of the material of the foam-tubes.

There are several mechanisms known from the prior art for closing the above-identified gap in the material. In many cases, the gap is closed by depositing an adhesive along an interface between adjacent sections of the material along the gap. In particular, solvent-based adhesives are used for this purpose.

However, adhesives, in particular solvent-based adhesives, have several disadvantages. For instance, adhesives, in particular solvent-based adhesives, may be prone to failure due to one or more factors.

Moreover, an adhesive's open time is dependent from a temperature at a site of use/installation of the respective adhesive, e.g., an adhesive used to join the above-mentioned gap(s), e.g., at a building site. Hence, different temperatures may lead to a significant change in the adhesive's open time, e.g., which may lead to prolonged installation times, if the temperature is relatively low. Moreover, relatively high temperatures may require a relatively fast installation. This may This may provide one or more constraints, in particular one or more undesirable constraints, for the application of the respective adhesive and/or may reduce the flexibility of use and/or application of the respective adhesive.

Moreover, the use of adhesives, in particular liquid adhesives, may not be favorable to the respective installers, since adhesives, in particular liquid adhesives, may have several negative characteristics during application of the respective adhesive. For instance, adhesives, in particular liquid adhesives, may soil the installer's skin and/or clothes and/or tools and/or sections of the workspace. Moreover, adhesives, in particular liquid adhesives, may have a relatively strong and/or unpleasant odor, in particular when applying the adhesive. Furthermore, adhesives generally have a limited shelf-life.

Moreover, sealing tapes are also often used to close the gap(s) in the material. Sealing tapes can either be pre-attached to an interface at adjacent sections of the material, e.g., in a way such that a user only has to remove a liner and can directly join said adjacent sections of the material manually. Such sealing tapes may, for instance, be implemented in so called self-seal tubes. Alternatively, sealing tapes may be handled separately and attached to a top-side of the insulation (i.e., a top-sealing tape), in particular just prior to installation, to substantially close one or more gaps after placing the material over the respective pipe.

However, sealing tapes which are specifically designed for insulation material, such as insulation material with a pre-installed self-sealing tape, are relatively expensive. Cheaper tape, such as duct-tape, is often used by do-it-yourself (DIY) installers, which may, however, have lower thermal insulation properties.

Furthermore, prolonged exposure to oxygen may cause an adhesive to fail and allow the gap in the material to unintentionally reopen at least partially. Adhesive tapes may also be negatively affected by moisture, dust, and/or one or more further media.

Clamps, in particular clamps made of plastic, are also used. The installation of clamps is generally relatively easy and self-explanatory. However, clamps are generally relatively expensive. Moreover, clamps generally do not physically bond the adjacent sections of the gap, unlike adhesives. Hence, the gap remains mechanically open, when using clamps, which may lead to relatively poor insulation and a relatively high risk of a transmission of media, e.g., moisture, dust, etc., through the gap.

Hence, the mechanisms known from the prior art for closing one or more gaps in a material have several disadvantages, as discussed above, which have not, or at least not sufficiently, been addressed in the prior art.

It is therefore an object of the present invention to provide an improved means for closing a gap in a material, in particular a gap in a material which at least partially covers one or more pipes, in particular by at least partially improving one or more of the above-identified disadvantages.

### Summary of the invention

This object is achieved by a device for thermally welding at least one thermally weldable material, as defined by the features of claim 1. Variations and further developments are defined by the features of the dependent claims.

The thermally weldable material may be a thermal insulation material, in particular for thermally insulating at least one pipe. For instance, the thermally weldable material may be configured as a cover which is made of a thermally insulating material, or which includes a thermally insulating material, e.g., foam. However, the thermally weldable material, within the context of the present disclosure, may be any type of material which is weldable by applying thermal energy. The cover may be tube-shaped, e.g. with an annular cross-section. The annular cross-section may be circular or polygonal. Preferably, at least one gap extends from an outer peripheral surface of the annular cross-section to an inner peripheral surface of the annular cross-section and/or along a longitudinal direction of the tube-shape. Alternatively, the cover may have any cross-sectional shape, e.g., a polygonal shape.

The device may include at least one heating device configured to heat at least one gas, preferably air. The device may include at least one applicator configured to be inserted at least partially in at least one gap between at least two adjacent sections of the material, during operation of the device. Alternatively, the heating device may be provided and/or arranged as a separate and/or external device. In other words, the heating device may be configured to supply the device for thermally welding at least one thermally weldable material, as described herein, with the heated gas The applicator may be directly connected to the heating device.

Alternatively, the device may include an adapter to interconnect the applicator and the heating device. The adapter may be relatively small to minimize size and/or weight of the device. Alternatively, the adapter may include a long, flexible hose to connect an external heating device with a smaller, hand-held applicator.

The applicator may include at least one channel for guiding the heated gas at least partially therethrough.

The channel may be configured to discharge the heated gas at least partially into the gap to at least partially melt at least one of the adjacent sections of the material, in a state in which the applicator is inserted at least partially between the adjacent sections of the material. Melting at least one of the adjacent sections of the material may allow the adjacent sections of the material to be bonded to each other, in particular by joining the adjacent sections and allowing the melted section(s) to resolidify.

### Detailed description of the invention

As discussed at the beginning, at least one material, e.g., a thermal insulation material, is often placed over one or more pipes e.g., to thermally insulate the pipes. After installing or mounting the material, i.e., by at least partially placing the material over the pipe, one or more gaps may remain between adjacent sections of the material. For instance, the gap may be provided to facilitate and/or allow installation of the material by enabling the pipe to pass through the gap, as the material is placed over pipe. Once the material is in place, it may be advantageous to close the gap by at least partially bonding adjacent sections of the material which bound and/or define the gap.

Advantageously, the device described herein may allow the applicator to be inserted at least partially into the gap between the adjacent sections of the material. The heated gas may then be discharged at least partially into the gap, i.e., in a state in which the applicator is inserted at least partially between the adjacent sections of the material. This may allow the heated gas to be discharged at least partially directly within the gap between the adjacent sections of the material, as opposed to an application of the heated gas from an external position onto the material along the gap. An application of the heated gas within the gap may allow to melt a relatively large area of the adjacent surfaces to be joined. In contrast, application of the heated gas from an external position onto the material along the gap may only melt a relatively small portion of the material along the adjacent sections of the material of the gap which may lead to a relatively weak bond between the adjacent sections of the material and/or a bond along only a relatively small portion of the adjacent sections of the material which may result in a relatively uneven bond and/or a reduced sealing effect along the gap.

Hence, the present invention may provide a bond between the adjacent sections of the material which has a relatively high strength, is relatively even along the adjacent sections of the material, and provides a relatively high sealing effect along the gap.

Moreover, the device described herein may allow the adjacent sections of the material to be bonded without the use of adhesives, sealing tapes and clamps, such that the disadvantages of these components, as described above, may be avoided.

Although the present invention is generally discussed herein for application to a material, in particular a thermally insulating material, which is used to cover at least one pipe, the device disclosed herein may be applied to a wide range of different materials in a variety of different fields and application.

The adjacent sections of the at least one material may be part of a single piece of the material, i.e., a coherent piece of the material. The gap may be an opening within the single piece of the material. For instance, the gap may extend along a longitudinal axis of the pipe, in a state in which the material has been placed over the pipe. Correspondingly, the adjacent sections of the material may each define an interface which at least partially borders and/or defines the gap. Alternatively, or additionally, the adjacent sections of the material may be sections of at least two pieces of the material which are arranged in series along the pipe, e.g. in series along a longitudinal direction of the pipe.

The gap may be at and/or may be at least partially defined by an interface between two faces of at least one thermally weldable material.

The gap may have any shape and/or dimension(s). Preferably, the gap may extend substantially linearly, e.g., along a longitudinal axis of a pipe, non-linearly, and/or circumferentially, e.g., at least partially about a circumference of a pipe, along the material.

The thermally weldable material may include one or more pieces of the thermally weldable material. The pieces of thermally weldable material may have any shape and/or dimension(s). For instance, the pieces of thermally weldable material may include, e.g., one or more reductions, one or more elbows, one or more T-shaped pieces, and/or one or more V-shaped pieces.

The thermally weldable material may be substantially planar, e.g., configured as one or more sheets. The thermally weldable material may have a range of different thicknesses.

The thermally weldable material may have a non-planar shape, e.g., a substantially tubular shape. In particular, the thermally weldable material may have a shape and/or one or more dimensions which enable the thermally weldable material to wrap around at least a portion of a circumference, preferably the entire circumference, of one or more pipes.

Preferably, the thermally weldable material may have a thickness of at least 3 mm, preferably at least 5 mm, more preferably at least 9 mm.

The adjacent sections of the material may be any faces of the thermally weldable material which face and/or abut each other or are configured to face and/or abut each other, e.g., by deforming, e.g., bending, the material.

The adjacent sections may overlap and/or abut each other.
Preferably, the thermally weldable material is a thermally insulating material and/or a foam, preferably a foam made from one or more of: at least one thermoplastic polymer, at least one thermoplastic elastomer, at least one bio-based and/or bio-sourced thermoplastic, preferably obtained from at least one bio-based monomer, and mixtures thereof.

The thermally weldable material may be made from one or more polymeric materials which may include, but are not limited to, any of the following: polyethylene, polypropylene, ethylene-vinyl acetate, polyolefin plastomers (POP) and elastomers (POE), polystyrene, styrenic block copolymers (TPS or TPE-s), thermoplastic polyolefin elastomers (TPO or TPE-o), thermoplastic vulcanizates (TPV or TPE-v), thermoplastic polyurethanes (TPU), thermoplastic copolyesters (TPC or TPE-E), thermoplastic polyamides (TPA or TPE-A), polylactid acid (PLA), poly-L-lactide, polyhydroxybuturate (PHB), polyhydroxyalkalonates (PHA), poly(ε-caprolactone) (PCL), polyesters and coopolyesters, and polyurethanes.

The heating device may be configured to heat the gas to a temperature sufficient to at least partially melt the material, e.g., at least to the softening point of the material, along the adjacent sections of the material. The heating device may be configured to adjust the temperature to which the gas is heated, e.g., to adapt to different materials which need to be heated to different temperatures to at least partially melt the respective material, in particular without overheating the material. The heating device is preferably electrically driven, preferably via a cord which is connectable to an electricity outlet and/or cordless, e.g., by means of one or more batteries or any other energy storage. A cordless configuration may allow the device to be handled more easily and/or more flexibly. This may increase the user-friendliness of the device.

Preferably, the heating device is configured as a hot-air gun. Preferably, the applicator is mountable, preferably releasably mountable, to the hot air gun.

Preferably, the device further includes at least one temperature control device configured to control a temperature to which the gas is heatable.

The applicator may be configured as a nozzle. The applicator may be blade-shaped, e.g., relatively thin in a direction which at least partially spans the gap, when the applicator is inserted at least partially within the gap, to facilitate insertion of the applicator into the gap and/or movement of the applicator along the gap.

The above-recited language "discharge the heated gas at least partially into the gap" may mean that the heated gas is discharged from the applicator at a location which is at least partially within the gap. For instance, the applicator may include at least one gas outlet, from which the gas is discharged from the applicator. The gas outlet may be arranged at least partially within the gap, when the gas is discharged from the applicator, more specifically from the gas outlet.

The applicator may be configured such that at least one end, preferably a distal end, of the applicator is insertable at least partially into the gap. In the context of the present disclosure, the term "distal end" refers to the furthest end of a structure, e.g., the applicator. The "distal end" may be an end of the applicator which is furthest away from the user during operation, e.g., when the applicator is inserted into the gap.

A width of the applicator, preferably a width of the applicator in a direction along the longitudinal extension of the gap and/or the pipe, may be tapered along at least a section of the applicator. For instance, the width of the applicator may be tapered along at least a section of the applicator towards a distal end of the applicator from a proximal end of the applicator. For instance, the applicator may be narrower in width at or towards a distal end of the applicator than at or towards a proximal end of the applicator. For example, a section of the applicator configured to be inserted into the gap may be substantially trapezoidal in shape.

This may further facilitate insertion of the applicator into the gap. Preferably, the shape is substantially a right or obtuse trapezoid.

The width of the applicator may extend in a single plane, preferably in a single plane which extends substantially perpendicularly to the channel and/or to a longitudinal axis of the applicator.

Alternatively, or additionally, a thickness of the applicator may be tapered along at least one leading edge and/or at least one leading side of the applicator (with respect to a direction along which the applicator is moved along the gap), e.g., to facilitate inserting the applicator into the gap and/or to facilitate opening the gap. The thickness of the applicator may extend in a direction which is substantially perpendicular to the width of the applicator.

The thickness of the applicator may extend in a single plane, preferably in a single plane which extends substantially perpendicularly to the channel and/or to a longitudinal axis of the applicator.

At least one leading side and/or at least one leading edge of the applicator, with respect to a direction along which the applicator is moved along the gap, may be configured to be inserted into the gap, and optionally spread open the gap, when the applicator is moved along a length of the gap, e.g., along a section of a pipe which may be at least partially covered by the material when the applicator is used to close the gap of the material covering the pipe.

The leading side and/or leading edge of the applicator may be arranged at an angle greater than 0°, preferably at least 20°, more preferably at least 30°, more preferably at least 45°, to a direction of movement of the applicator through and/or along the gap. For instance, the leading side or leading edge may be slanted or oblique with respect to a longitudinal axis of a pipe section along which the applicator is moved when the applicator is used to close the gap of the material covering the pipe, e.g. at an angle of at least 20°, preferably at least 30°, more preferably at least 45°. This may facilitate movement of the applicator through the gap. However, a non-slanted leading side is also feasible.

The applicator may include a single channel or a plurality of channels for conveying the heated gas therethrough. Alternatively, or additionally, one or more of the channel(s) may split into a plurality of sub channels, preferably in a downstream direction of the channel. This may allow, for instance, a plurality of gas outlets to be provided based on one gas inlet, e.g., a single gas inlet, into the channel.

Preferably, the channel is configured to redirect the heated gas within the channel. For this purpose, the channel may be shaped accordingly, e.g., with one or more curves and/or one or more bends along a path along which the gas travels through the channel. This may allow the gas to be guided to at least one preferred point of discharge from the applicator.

Alternatively, or additionally, the channel may have a substantially linear shape.

Alternatively, or additionally, the channel may be angled with respect to a longitudinal axis of the applicator by more than 0° to less than 180°, preferably by 10° to 160°, more preferably by 10° to 140°, more preferably by 10° to 120°, preferably by 10° to 100°, more preferably by 10° to 95°, more preferably by 15° to 95°, more preferably by 20° to 95°, more preferably by 25° to 95°, more preferably by 30° to 95°, more preferably by 35° to 95°. In other words, the channel may extend substantially along and/or parallel to a longitudinal axis of the applicator or at an angle greater than 0° with respect to the longitudinal axis of the applicator.

Alternatively, or additionally, the channel may extend non-linearly through the applicator. Preferably, the channel includes at least two sections, preferably at least two substantially straight sections, which have different angles with respect to the longitudinal axis of the applicator. For instance, the channel may include least two sections which are angled relative to each other to redirect the heated gas within the channel. The angle may be in a range from 20° to 120°, more preferably from 20° to 110°, more preferably from 20° to 100°, more preferably from 25° to 100°, more preferably from 25° to 90°, more preferably from 35° to 90°, more preferably from 45° to 90°, more preferably from 55° to 90°, more preferably from 65° to 90°. For instance, the channel may have an L-shape.

Alternatively, or additionally, the channel may have at least one curved section, e.g., such as an S-shape.

Alternatively, or additionally, the heating device may have at least one outlet to which the applicator is attached. The outlet may extend and/or may be configured to output a stream of the heated gas in a first direction. A central axis of at least a section of the channel may extend obliquely to said first direction. A central axis of at least a section of the channel may extend to said first direction at an angle of 10° to 110°, preferably by 10° to 100°, more preferably by 10° to 95°, more preferably by 15° to 95°, more preferably by 20° to 95°, more preferably by 25° to 95°, more preferably by 30° to 95°, more preferably by 35° to 95°.

Preferably, the channel includes at least one gas outlet through which the heated gas can be discharged.

Preferably, the gas outlet is arranged off-center, with respect to a longitudinal central axis of the applicator. In particular, the gas outlet may be arranged towards or at one side of the applicator, e.g. closer to a trailing side of the applicator when the applicator is moved through the gap.

Preferably, the gas outlet has a cross-section which extends in a first dimension and a second dimension which is substantially perpendicular to the first dimension. A ratio of the first and the second dimension may range from 2 to 12, preferably from 2 to 11, more preferably from 2 to 10, more preferably from 2 to 9, more preferably from 2 to 8, more preferably from 2 to 7, more preferably from 2.5 to 7, more preferably from 3 to 7, more preferably from 3.5 to 7, more preferably from 4 to 7, more preferably from 4 to 6.5. The gas outlet may have any cross-sectional shape, e.g., round, oval, rectangular, etc.

Preferably, a distal end of the applicator is free of any gas outlets. Alternatively, or additionally, at least one lateral side of the applicator, the lateral side preferably extending substantially along a longitudinal axis of the applicator, may be free of any gas outlets. For instance, the gas outlet(s) may be arranged on and/or along a trailing side and/or a leading side of the applicator.

In other words, the applicator may have a first main surface, an opposite second main surface, and a peripheral sidewall connecting the first main surface to the second main surface. The first and second main surfaces may face towards the adjacent sections of the material that are to be bonded to one another when the applicator is inserted between the adjacent sections of the material. The first and/or second main surfaces may be free of the one or more gas outlets.

The peripheral sidewall may have a first sidewall section facing in the direction in which the applicator moves along the gap and/or along the pipe. The first section may also be referred to as the leading or front sidewall section. This first sidewall section may be free of one or more gas outlets. This allows the first sidewall section to push the adjacent section apart when moving the applicator through the gap while reducing the risk of melting the material, which could then adhere to the applicator and/or clog the one or more gas outlets. Moreover, as described above, this first sidewall section may be slanted to facilitate pushing apart the adjacent sections.

The peripheral sidewall may further comprise a second sidewall section facing away from the direction in which the applicator moves along the gap and/or along the pipe. This second section may also be referred to as the trailing or rear sidewall section. The one or more gas outlets may be provided along the second sidewall section. This allows to melt the material after it has been spread apart and the applicator has passed through the respective portion of the gap. This may reduce the risk of material adhering to the applicator.

The peripheral sidewall may comprise a third sidewall section facing towards the pipe. Depending on the intended use of the applicator (e.g., for joining a gap extending along the longitudinal direction of the pipe or for joining a gap extending peripherally around the pipe), the third sidewall section may be free of one or more gas outlets or one or more gas outlets may be provided therein. In this manner, the flow of gas may be directed as it is most suitable for the particular application.

The peripheral sidewall may comprise a fourth sidewall section facing towards the heating device. A gas inlet may be provided along the forth sidewall section.

Preferably, the applicator has a thickness which extends between the adjacent sections of the material, in a state in which the applicator is inserted at least partially between the adjacent sections of the material.

Preferably, the applicator has a thickness which extends between the adjacent sections of the material in a state in which the applicator is inserted at least partially between the adjacent sections of the material. The thickness of the applicator may be no more than 25 mm, more preferably no more than 22.5 mm, more preferably no more than 20 mm, more preferably no more than 17.5 mm, more preferably no more than 15 mm, more preferably no more than 12.5 mm, more preferably no more than 10 mm.

Preferably, the thickness is as small as possible to facilitate closing the gap, while maintaining a sufficient flow of the heated gas through the channel, in particular by ensuring a sufficient cross-sectional flow area through the channel. Preferably, the thickness of the applicator exceeds a thickness of the channel, i.e., in the same dimensional direction, by at least 1 mm, preferably at least 1.5 mm, preferably by 1 mm to 15 mm, more preferably by 1 mm to 12.5 mm, more preferably by 1 mm to 10 mm, more preferably by 1 mm to 7.5 mm, more preferably by 1 mm to 5 mm, more preferably by 1 mm to 4 mm, more preferably by 1 mm to 3 mm, more preferably by 1 mm to 2 mm.

Preferably, the applicator has a width which extends along the gap between the adjacent sections of the material, in a state in which the applicator is inserted at least partially between the adjacent sections of the material.

The width may range from 5 mm to 60 mm, 10 mm to 60 mm, 15 mm to 60 mm, 20 mm to 60 mm, preferably from 22.5 mm to 55 mm, more preferably from 25 mm to 50 mm, more preferably from 27.5 mm to 45 mm, more preferably from 30 mm to 40 mm.

The width of the applicator may exceed a width of the channel, i.e., in the same dimensional direction, by at least 2 mm, preferably at least 10 mm, most preferably at least 20 mm, on each side of the channel in a direction along the width of the applicator.

Preferably, the applicator has a thickness which extends between the adjacent sections of the material, i.e., from one of the adjacent sections to or towards the other of the adjacent sections, and a width which extends along the gap and/or substantially parallel to one or each of the adjacent sections, in a state in which the applicator is inserted at least partially between the adjacent sections of the material. Preferably, a ratio of the width to the thickness ranges from 2 to 12, preferably from 2 to 11, more preferably from 2 to 10, more preferably from 2 to 9, more preferably from 2 to 8, more preferably from 2 to 7, more preferably from 2.5 to 7, more preferably from 3 to 7, more preferably from 3.5 to 7, more preferably from 4 to 7, more preferably from 4 to 6.5.

The applicator may be configured monolithically and/or as a single piece. Alternatively, the applicator may be assembled from a plurality of parts, preferably from two half-shells.

The applicator may be at least partially made from a material which has a relatively low thermal conductivity, preferably no more than 15 W/mK, prefferably no more than 12.5 W/mK, more preferably no more than 10 W/mK, more preferably no more than 7.5 W/mK, more preferably no more than 5 W/mK, more preferably no more than 2.5 W/mK, more preferably no more than 2 W/mK, more preferably no more than 1.5 W/mK, more preferably no more than 1 W/mK, more preferably no more than 0.5 W/mK. This may reduce and/or limit a temperature of the applicator, in particular of one or more outer surfaces of the applicator, e.g., to prevent damage to the material and/or to prevent the material from sticking to the applicator, or at least reduce the risk thereof. For instance, the applicator may be made of, e.g., plastic, e.g., Polytetrafluoroethylene (PTFE).

The applicator may be made of a basis material, e.g., PTFE, which may be reinforced, in particular by one or more fibers, e.g., one or more glass fibers. This may enhance the strength of the applicator in relation to the thickness of the material of the applicator. This may also increase the heat distortion temperature (HDT) of the applicator and may increase dimensional stability of the applicator while exposed to elevated temperature over a relatively long period of operation.

However, a range of further materials may be used to make the applicator.

Alternatively, or additionally, the applicator may include at least one thermally insulating element which is made from a material which has a relatively low thermal conductivity, preferably no more than 15 W/mK, preferably no more than 12.5 W/mK, more preferably no more than 10 W/mK, more preferably no more than 7.5 W/mK, more preferably no more than 5 W/mK, more preferably no more than 2.5 W/mK, more preferably no more than 2 W/mK, more preferably no more than 1.5 W/mK, more preferably no more than 1 W/mK, more preferably no more than 0.5 W/mK. Manufacturing the applicator at least partially from a material which has a relatively low thermal conductivity and/or including at least one thermally insulating element which is made from a material which has a relatively low thermal conductivity may reduce a surface temperature of the applicator in order to allow the applicator to contact the material during use, i.e., while the heated gas flows through the channel, while preventing the material from adhering to the applicator, or at least reducing the risk thereof.

Alternatively, or additionally, the applicator may include at least one coating which is arranged at least partially on an outer surface of the applicator. The coating may be configured to reduce adhesion of the applicator to the thermally weldable material, in a state in which the applicator is inserted at least partially between the adjacent sections of the material. This may also allow the applicator to contact the material during use, i.e., while the heated gas flows through the channel, while preventing the material from adhering to the applicator, or at least reducing the risk thereof. The coating may be arranged on the entire outer surface of the applicator or at least along one or more sections which are in contact or may contact the material during use.

Preferably, the applicator is configured to withstand temperatures of at least 200°, preferably at least 225°, more preferably at least 250°. For instance, the applicator may be made of polytetrafluoroethylene (PTFE), polyetherimide (PEI) and/or polyaryletherketone, such as polyether ether ketone (PEEK). However, as stated above, a range of further materials may be used to make the applicator. To "configured to withstand temperatures" means, within the context of the present disclosure, to operate at a maximum temperature without deforming, melting, or structurally compromising the applicator in general, e.g., due to thermal degradation and/or decomposition.

The applicator may be at least partially made of a material which prevents, or at least reduces, adhesion of the applicator to the thermally weldable material, in a state in which the applicator is inserted at least partially between the adjacent sections of the material.

Preferably, in a state in which the applicator is inserted at least partially between the adjacent sections of the material, the applicator is configured to abut at least one pipe arranged at least partially within the thermally weldable material, while discharging the heated gas along at least a section of the gap.

Preferably, in the abutted state, the applicator is configured to discharge the heated gas substantially parallel to a longitudinal axis of the pipe and/or substantially tangentially to a circumference of the pipe (depending on the type of gap).

Preferably, the device further includes at least one adapter configured to interconnect the heating device and the applicator.

The adapter may be configured to attach to a commercially available heating device, e.g., a commercially available hot air gun. This may allow the applicator, preferably a plurality of different applicators, to be used with a commercially available heating device, preferably a wide range of commercially available heating devices. The adapter may be a separate component that is mechanically connected, e.g., via a friction fit and/or a form fit, to the applicator.

Preferably, the adapter forms and/or includes a conduit extending at least partially therethrough. The conduit may be fluidly connected to the channel of the applicator.

Preferably, the device further includes a mounting mechanism which has at least one quick-release mechanism for providing a quick-release attachment of the applicator. This may facilitate using different applicators, e.g., applicators having different shapes and/or different sizes, by allowing a relatively quick swap of the respective applicators. The quick-release mechanism may be achieved, e.g., via at least one screw, e.g., at least one grub screw, at least one snap-fit connection, at least one screw thread, a frictional fit, at least one bayonet connection, at least one clamp, etc.

Preferably, at least the applicator, preferably including the heating device, is configured as a handheld device. Preferably, the entire device, including all components, e.g., the applicator, the heating device, a power source, e.g., a battery, and any other components, is configured as a handheld device.

Preferably, the device is configured as a portable unit. This may facilitate the operation of the device and/or may increase the flexibility of the device and/or may increase the user-friendliness of the device and/or may increase the handleability of the device. This may allow the device to be used for a variety of different applications and/or in a variety of different locations and/or environments.

Preferably, the applicator is configured to be moved along the gap, in a state in which the applicator is inserted at least partially between the adjacent sections of the material and the heated gas is being discharged from the channel within the gap. This may allow the device to at least partially melt the adjacent sections, while the applicator is moved along the gap. This may allow the entire gap, or at least a relatively large section of the gap, to be closed by moving the applicator through and/or along the gap, e.g., continuously and/or discontinuously.

Preferably, the applicator is configured to be moved at least partially along the gap while the adjacent sections of the material are being pressed together, preferably behind the applicator such that the adjacent sections of the material at least partially contact each other, in a state in which the applicator is inserted at least partially in the gap and the heated gas is being discharged from the channel within the gap. This may facilitate joining the adjacent sections of the material. The adjacent sections of the material may be pressed together at least along a portion of the gap through which the applicator has moved, e.g., immediately after the applicator has moved therethrough. The adjacent sections of the material may be pressed together, preferably in a releasable manner, manually and/or via one or more devices, e.g., one or more automated and/or motorized devices, e.g., one or more clamps.

Preferably, the applicator is configured to be moved at least partially along the gap in a first direction, in a state in which the applicator is inserted at least partially in the gap and the heated gas is being discharged from the channel within the gap in a second direction. The first direction and the second direction may be arranged with respect to each other at an angle
- in a range from 10° to 210°, preferably from 20° to 210°, more preferably from 30° to 210°, more preferably from 40° to 210°, more preferably from 50° to 210°, more preferably from 60° to 210°, more preferably from 60° to 210°, more preferably from 60° to 210°, more preferably from 150° to 210°, more preferably 150° to 200°, more preferably 150° to 190°; and/or
- of at least 10°, preferably at least 20°, more preferably at least 30°, more preferably at least 40°, more preferably at least 50°, more preferably at least 60, more preferably at least 90°, more preferably at least 120°, more preferably at least 150°; and/or
- of 210° or less, preferably 200° or less, more preferably 190° or less, more preferably of 180° or less.

Preferably, the applicator is configured to at least partially contact the thermally weldable material, in particular at least one of the adjacent sections of the thermally weldable material, in a state in which the applicator is inserted at least partially in the gap and the heated gas is being discharged from the channel within the gap. This may facilitate joining the adjacent sections. For instance, the adjacent sections may be pressed together at least partially onto the applicator. The applicator may include one or more means to prevent the adjacent sections of the thermally weldable material from sticking to the applicator.

Preferably, the channel is tapered, preferably conically tapered, along at least a section thereof, preferably tapered and/or narrowing in a direction in which the heated gas is guided through the channel.

The present invention also relates to a kit including the device for thermally welding at least one thermally weldable material according to any of the embodiments described herein and a plurality of applicators.. The plurality of applicators may be interchangeably mountable to the device, i.e., on the device for thermally welding at least one thermally weldable material.

Preferably, the plurality of applicators differ in one or more or the following: one or more dimensions of the channel, one or more directions in which the channel extends, a direction in which the heated gas is discharged, one or more materials which the applicators are made of, one or more outer shapes of the applicator, one or more outer dimensions of the applicator, a general design of the channel, and one or more locations of a gas outlet of the channel through which the heated gas is discharged.

The object mentioned at the beginning is also achieved by a method for thermally welding at least one thermally weldable material.

The features, embodiments, and advantages, as detailed herein with respect to the device (for thermally welding at least one thermally weldable material), apply to the method accordingly.

The method may be performed by means of and/or with the aid of the device (for thermally welding at least one thermally weldable material) described herein, e.g., as described above.

The steps of the method described herein are not limited to a particular sequence and may be performed in any technically feasible sequence.

The method may include a step of providing a device for thermally welding the least one thermally weldable material, the device including at least one heating device configured to heat at least one gas and at least one applicator which includes at least one channel for guiding the heated gas at least partially therethrough.

The method may include a step of inserting the applicator at least partially in at least one gap between at least two adjacent sections of the material.

The method may include a step of discharging the heated gas from the channel at least partially into the gap to at least partially melt at least one of the adjacent sections of the material, in a state in which the applicator is inserted at least partially between the adjacent sections of the material.

The method may include a step of joining the adjacent sections of the material.

Preferably, the adjacent sections of the material are joined to substantially close and/or seal the entire gap between the adjacent sections of the material. For instance, the gap may extend along a longitudinal direction of the material and/or the pipe, in a state in which the material has been applied and/or mounted to the pipe. The adjacent sections of the material may be joined to provide a stable seam along the longitudinally extending gap, i.e., a full longitudinal seam. Alternatively, or additionally, the gap may be defined and/or arranged between at least two pieces of the material which are arranged sequentially, in particular when the pieces of the material have been applied and/or mounted to the pipe sequentially in the longitudinal direction of the pipe (e.g., several tubular portions of material arranged around the same pipe one after the other). In other words, the gap may be defined and/or arranged at and/or at least one butt joint area. The adjacent sections of the material may be joined around the entire area of the butt joint area.

The thermally weldable material may include one or more pieces of the thermally weldable material. The pieces of thermally weldable material may have any shape and/or dimension(s). For instance, the pieces of thermally weldable material may include, e.g., one or more reductions, one or more elbows, one or more T-shaped pieces, and/or one or more V-shaped pieces.

The thermally weldable material may be a pipe insulation, preferably a tubular pipe insultation with an annular cross-section. The annular cross-section may have a circular shape, an oval shape or a polygonal shape.

Preferably, in a state in which the applicator is inserted at least partially between the adjacent sections of the material and the heated gas is discharged along at least a section of the gap, the applicator abuts at least one pipe arranged at least partially within the thermally weldable material.

Preferably, the heated gas is discharged substantially parallel to a longitudinal axis of the pipe (e.g., when a gap extending in the longitudinal direction of the pipe is being closed, such as when a tubular pipe insulation is closed around a pipe) and/or substantially tangentially to a circumference of the pipe (e.g., when a gap extending circumferentially around the pipe - such as in a butt joint area between two tubular pipe insulations - is being closed).

Preferably, the applicator is moved along the gap, in a state in which the applicator is inserted at least partially between the adjacent sections of the material and the heated gas is being discharged from the channel within the gap.

Preferably, the adjacent sections of the material are pressed together, preferably manually pressed together, such that the adjacent sections of the material at least partially contact each other. The adjacent sections of the material may be pressed together along a section thereof immediately after the application has moved along said section and/or in a state in which the applicator is still inserted at least partially in the gap and the heated gas is being discharged from the channel within the gap.

Preferably, the applicator is moved at least partially along the gap in a first direction, in a state in which the applicator is inserted at least partially in the gap, and the heated gas is being discharged from the channel within the gap in a second direction. The first direction and the second direction may be arranged with respect to each other at an angle:
- in a range from 10° to 210°, preferably from 20° to 210°, more preferably from 30° to 210°, more preferably from 40° to 210°, more preferably from 50° to 210°, more preferably from 60° to 210°, more preferably from 90° to 210°, more preferably from 120° to 210°, more preferably from 150° to 210°, more preferably 150° to 200°, more preferably 150° to 190°; and/or
- of at least 10°, preferably at least 20°, more preferably at least 30°, more preferably at least 40°, more preferably at least 50°, more preferably at least 60, more preferably at least 90°, more preferably at least 120°, more preferably at least 150°; and/or
- of 210° or less, preferably 200° or less, more preferably 190° or less, more preferably of 180° or less.

Preferably, the applicator at least partially contacts the thermally weldable material, in particular at least one or both of the adjacent sections of the thermally weldable material, in a state in which the applicator is inserted at least partially in the gap and the heated gas is being discharged from the channel within the gap.

Preferably, at least the applicator, preferably including the heating device, is maneuvered as a handheld device at least while inserting the applicator at least partially in at least one gap between at least two adjacent sections of the material and/or at least while moving the applicator least partially along the gap, in a state in which the applicator is inserted at least partially in the gap and the heated gas is being discharged from the channel within the gap.

Preferably, the gas is heated to a temperature in a range of 80 °C to 200 °C, preferably 110 °C to 130 °C. The temperature is preferably measured at a distance of approximately 10 mm downstream from a gas outlet of the applicator.

Preferably, the heated gas is discharged at an air-flow rate in a range of 100 L/min to 800 L/min, preferably 300 L/min to 500 L/min.

Preferably, the device for thermally welding the least one thermally weldable material is a device according to any of the embodiments described herein.

The following list of aspects provides preferred embodiments of the present disclosure:
1. A device for heating and/or at least partially melting and/or thermally welding at least one material, preferably at least one thermally weldable material, the device including:
   at least one applicator configured to be inserted at least partially in at least one gap between at least two adjacent sections of the material, during operation of the device;
   wherein the applicator includes at least one channel for guiding gas, preferably heated gas, at least partially therethrough;
   wherein the device and/or the channel is/are configured to discharge the heated gas at least partially into the gap, preferably to at least partially melt at least one of the adjacent sections of the material, preferably in a state in which the applicator is inserted at least partially between the adjacent sections of the material;
   optionally wherein the device includes at least one heating device configured to heat the gas.
2. The device according to aspect 1, wherein the thermally weldable material is a thermally insulating material and/or a foam, preferably a foam made from thermoplastic polymers, thermoplastic elastomers, bio-based and bio-sourced thermoplastics, preferably obtained from bio-based monomers, and mixtures thereof.
3. The device according to aspect 1 or 2, wherein:
   - the channel is configured to redirect the heated gas within the channel; and/or
   - the channel has a substantially linear shape, wherein the channel is angled with respect to a longitudinal axis of the applicator by 0° to 180°, preferably by 10° to 160°, more preferably by 10° to 140°, more preferably by 10° to 120°, preferably by 10° to 100°, more preferably by 10° to 95°, more preferably by 15° to 95°, more preferably by 20° to 95°, more preferably by 25° to 95°, more preferably by 30° to 95°, more preferably by 35° to 95°; and/or
   - the channel extends non-linearly through the applicator, preferably wherein the channel includes at least two substantially straight sections which have different angles with respect to the longitudinal axis of the applicator; and/or
   - the channel has at least one curved section; and/or
   - wherein the heating device has an outlet to which the applicator is attached, wherein the outlet extends and/or is configured to output a stream of the heated gas in a first direction, wherein a central axis of at least a section of the channel extends obliquely to said first direction, preferably wherein a central axis of at least a section of the channel extends to said first direction at an angle of 10° to 110°, preferably by 10° to 100°, more preferably by 10° to 95°, more preferably by 15° to 95°, more preferably by 20° to 95°, more preferably by 25° to 95°, more preferably by 30° to 95°, more preferably by 35° to 95°.
4. The device according to any of the preceding aspects, wherein the channel includes a gas outlet, preferably through which the heated gas can be discharged.
5. The device according to aspect 4, wherein the gas outlet is arranged off-center, preferably with respect to a longitudinal central axis of the applicator.
6. The device according to aspect 4 or 5, wherein the gas outlet has a cross-section which extends in a first dimension and a second dimension which is substantially perpendicular to the first dimension, wherein a ratio of the first and the second dimension ranges from 2 to 12, preferably from 2 to 11, more preferably from 2 to 10, more preferably from 2 to 9, more preferably from 2 to 8, more preferably from 2 to 7, more preferably from 2.5 to 7, more preferably from 3 to 7, more preferably from 3.5 to 7, more preferably from 4 to 7, more preferably from 4 to 6.5.
7. The device according to any of the preceding aspects, wherein:
   a distal end of the applicator is free of any gas outlets; and/or
   at least one lateral side of the applicator, the lateral side preferably extending substantially along a longitudinal axis of the applicator, is free of any gas outlets.
8. The device according to any of the preceding aspects, wherein the applicator has a thickness which extends between the adjacent sections of the material, in a state in which the applicator is inserted at least partially between the adjacent sections of the material, wherein the thickness of the applicator exceeds a width of the channel by at least 1 mm, preferably at least 1.5 mm.
9. The device according to any of the preceding aspects, wherein the applicator has a width which extends along the gap between the adjacent sections of the material, in a state in which the applicator is inserted at least partially between the adjacent sections of the material, wherein the width of the applicator exceeds a width of the channel by at least 2 mm at each side, preferably at least 10 mm, most preferably at least 20 mm.
10. The device according to any of the preceding aspects, wherein the applicator has a thickness which extends between the adjacent sections of the material and a width which extends along the gap between the adjacent sections of the material, in a state in which the applicator is inserted at least partially between the adjacent sections of the material, wherein a ratio of the width to the thickness ranges from 2 to 12, preferably from 2 to 11, more preferably from 2 to 10, more preferably from 2 to 9, more preferably from 2 to 8, more preferably from 2 to 7, more preferably from 2.5 to 7, more preferably from 3 to 7, more preferably from 3.5 to 7, more preferably from 4 to 7, more preferably from 4 to 6.5.
11. The device according to any of the preceding aspects, wherein the applicator:
   is configured monolithically and/or as a single piece; or
   is assembled from a plurality of parts, preferably from two half-shells.
12. The device according to any of the preceding aspects, wherein the applicator:
   is at least partially made from a material which has a relatively low thermal conductivity, preferably no more than 15 W/mK, preferably no more than 12.5 W/mK, more preferably no more than 10 W/mK, more preferably no more than 7.5 W/mK, more preferably no more than 5 W/mK, more preferably no more than 2.5 W/mK, more preferably no more than 2 W/mK, more preferably no more than 1.5 W/mK, more preferably no more than 1 W/mK, more preferably no more than 0.5 W/mK; and/or
   includes at least one thermally insulating element which is made from a material which has a relatively low thermal conductivity, preferably no more than 15 W/mK, preferably no more than 12.5 W/mK, more preferably no more than 10 W/mK, more preferably no more than 7.5 W/mK, more preferably no more than 5 W/mK, more preferably no more than 2.5 W/mK, more preferably no more than 2 W/mK, more preferably no more than 1.5 W/mK, more preferably no more than 1 W/mK, more preferably no more than 0.5 W/mK.
13. The device according to any of the preceding aspects, wherein the applicator is configured to withstand temperatures of at least 200°, preferably at least 225°, more preferably at least 250°.
14. The device according to any of the preceding aspects, wherein:
   the applicator is at least partially made of a material which prevents, or at least reduces, adhesion of the applicator to the thermally weldable material, in a state in which the applicator is inserted at least partially between the adjacent sections of the material; and/or
   the applicator includes at least one coating which is arranged at least partially on an outer surface of the applicator, wherein the coating is configured to reduce adhesion of the applicator to the thermally weldable material, in a state in which the applicator is inserted at least partially between the adjacent sections of the material.
15. The device according to any of the preceding aspects, wherein, in a state in which the applicator is inserted at least partially between the adjacent sections of the material, the applicator is configured to abut at least one pipe arranged at least partially within the thermally weldable material, while discharging the heated gas along at least a section of the gap.
16. The device according to any of the preceding aspects, wherein, in the abutted state, the applicator is configured to discharge the heated gas substantially parallel to a longitudinal axis of the pipe and/or substantially tangentially to a circumference of the pipe.
17. The device according to any of the preceding aspects, wherein the heating device is configured as a hot-air gun, wherein the applicator is mountable, preferably releasably mountable, to the hot-air gun.
18. The device according to any of the preceding aspects, further including at least one temperature control device configured to control a temperature to which the gas is heatable.
19. The device according to any of the preceding aspects, further including at least one adapter configured to interconnect the heating device and the applicator.
20. The device according to aspect 19, wherein the adapter forms a conduit extending at least partially therethrough, preferably wherein the conduit is fluidly connected to the channel of the applicator.
21. The device according to any of the preceding aspects, wherein the applicator is configured to be moved along the gap, in a state in which the applicator is inserted at least partially between the adjacent sections of the material and the heated gas is being discharged from the channel within the gap.
22. The device according to any of the preceding aspects, wherein the applicator is configured to be moved at least partially along the gap while the adjacent sections of the material are being pressed together, preferably behind the applicator such that the adjacent sections of the material at least partially contact each other, in a state in which the applicator is inserted at least partially in the gap and the heated gas is being discharged from the channel within the gap
23. The device according to any of the preceding aspects, wherein the applicator is configured to be moved at least partially along the gap in a first direction, in a state in which the applicator is inserted at least partially in the gap and the heated gas is being discharged from the channel within the gap in a second direction, wherein the first direction and the second direction are arranged with respect to each other at an angle
   - in a range from 10° to 210°, preferably from 20° to 210°, more preferably from 30° to 210°, more preferably from 40° to 210°, more preferably from 50° to 210°, more preferably from 60° to 210°, more preferably from 60° to 210°, more preferably from 60° to 210°, more preferably from 150° to 210°, more preferably 150° to 200°, more preferably 150° to 190°; and/or
   - of at least 10°, preferably at least 20°, more preferably at least 30°, more preferably at least 40°, more preferably at least 50°, more preferably at least 60, more preferably at least 90°, more preferably at least 120°, more preferably at least 150°; and/or
   - of 210° or less, preferably 200° or less, more preferably 190° or less, more preferably of 180° or less.
24. The device according to any of the preceding aspects, wherein the applicator is configured to at least partially contact the thermally weldable material, in particular at least one of the adjacent sections of the thermally weldable material, preferably in a state in which the applicator is inserted at least partially in the gap and the heated gas is being discharged from the channel within the gap.
25. The device according to any of the preceding aspects, wherein the channel is tapered, preferably conically tapered, along at least a section thereof, preferably in a direction in which the heated gas is guided through the channel.
26. The device according to any of the preceding aspects, wherein at least the applicator, preferably including the heating device, is configured as a handheld device.
27. The device according to any of the preceding aspects, wherein the device is configured as a portable unit.
28. The device according to any of the preceding aspects, further including a mounting mechanism which preferably has at least one quick-release mechanism for providing a quick-release attachment of the applicator.
29. The device according to any of the preceding aspects, wherein the applicator has a width which extends along the gap between the adjacent sections of the material, in a state in which the applicator is inserted at least partially between the adjacent sections of the material, wherein the width ranges from 5 mm to 60 mm, 10 mm to 60 mm, 15 mm to 60 mm, 20 mm to 60 mm, preferably from 22.5 mm to 55 mm, more preferably from 25 mm to 50 mm, more preferably from 27.5 mm to 45 mm, more preferably from 30 mm to 40 mm.
30. A kit including the device according to any of the preceding aspects and a plurality of the at least one applicator, wherein the applicators are interchangeably mountable to the device.
31. The kit according to aspect 30, wherein the plurality of applicators differ in one or more or the following: one or more dimensions of the channel, one or more directions in which the channel extends, a direction in which the heated gas is discharged, one or more materials which the applicators are made of, one or more outer shapes of the applicator, one or more outer dimensions of the applicator, a general design of the channel, and one or more locations of an gas outlet of the channel through which the heated gas is discharged.
32. A method for heating and/or at least partially melting and/or thermally welding at least one material, preferably at least one thermally weldable material, the method including:
   providing a device, preferably a device for thermally welding the least one thermally weldable material, the device including at least one applicator which includes at least one channel for guiding gas, preferably heated gas, at least partially therethrough, preferably wherein the device includes at least one heating device configured to heat the gas;
   inserting the applicator at least partially in at least one gap between at least two adjacent sections of the material;
   discharging the heated gas from the channel at least partially into the gap, preferably to at least partially melt at least one of the adjacent sections of the material, in a state in which the applicator is inserted at least partially between the adjacent sections of the material; and
   optionally joining the adjacent sections of the material.
33. The method according to aspect 32, wherein thermally weldable insulation material is a pipe insulation, preferably a tubular pipe insultation.
34. The method according to aspect 32 or 33, wherein, in a state in which the applicator is inserted at least partially between the adjacent sections of the material and the heated gas is discharged along at least a section of the gap, the applicator abuts at least one pipe arranged at least partially within the thermally weldable material.
35. The method according to any of aspects 32 to 34, wherein the heated gas is discharged substantially parallel to a longitudinal axis of the pipe and/or substantially tangentially to a circumference of the pipe.
36. The method according to any of aspects 32 to 35, wherein the applicator is moved along the gap, in a state in which the applicator is inserted at least partially between the adjacent sections of the material and the heated gas is being discharged from the channel within the gap.
37. The method according to any of aspects 32 to 36, wherein the adjacent sections of the material are pressed together, preferably manually pressed together, such that the adjacent sections of the material at least partially contact each other, preferably wherein the adjacent sections of the material are pressed together along a section thereof immediately after the application has moved along said section and/or in a state in which the applicator is still inserted at least partially in the gap and the heated gas is being discharged from the channel within the gap.
38. The method according to any of aspects 32 to 37, wherein the applicator is moved at least partially along the gap in a first direction, in a state in which the applicator is inserted at least partially in the gap, and the heated gas is being discharged from the channel within the gap in a second direction, wherein the first direction and the second direction are arranged with respect to each other at an angle:
   - in a range from 10° to 210°, preferably from 20° to 210°, more preferably from 30° to 210°, more preferably from 40° to 210°, more preferably from 50° to 210°, more preferably from 60° to 210°, more preferably from 90° to 210°, more preferably from 120° to 210°, more preferably from 150° to 210°, more preferably 150° to 200°, more preferably 150° to 190°; and/or
   - of at least 10°, preferably at least 20°, more preferably at least 30°, more preferably at least 40°, more preferably at least 50°, more preferably at least 60, more preferably at least 90°, more preferably at least 120°, more preferably at least 150°; and/or
   - of 210° or less, preferably 200° or less, more preferably 190° or less, more preferably of 180° or less.
39. The method according to any of aspects 32 to 38, wherein the applicator at least partially contacts the thermally weldable material, in particular at least one or both of the adjacent sections of the thermally weldable material, in a state in which the applicator is inserted at least partially in the gap and the heated gas is being discharged from the channel within the gap.
40. The method according to any of aspects 32 to 39, wherein at least the applicator, preferably including the heating device, is maneuvered as a handheld device at least while inserting the applicator at least partially in at least one gap between at least two adjacent sections of the material and/or at least while moving the applicator least partially along the gap, in a state in which the applicator is inserted at least partially in the gap and the heated gas is being discharged from the channel within the gap.
41. The method according to any of aspects 32 to 40, wherein the gas is heated to a temperature in a range of 80 °C to 200 °C, preferably 110 °C to 130 °C.
42. The method according to any of aspects 32 to 41, wherein the heated gas is discharged at an air-flow rate in a range of 100 L/min to 800 L/min, preferably 300 L/min to 500 L/min.
43. The method according to any of aspects 32 to 42, wherein the device for thermally welding the least one thermally weldable material is a device according to any of aspects 1 to 29 or part of a kit according to any of aspects 30 or 31.

Preferred embodiments of the present invention are further elucidated below with reference to the figures. The described embodiments are merely exemplary and do not limit the present invention, as defined by the claims and their respective equivalents.
- Fig. 1: shows, in a schematic and perspective illustration, a device for thermally welding at least one thermally weldable material according to an embodiment of the present disclosure during operation of the device;
- Fig. 2: shows, in a schematic and perspective illustration, a device for thermally welding at least one thermally weldable material according to an embodiment of the present disclosure during operation of the device;
- Fig. 3: shows, in a schematic and perspective illustration, a device for thermally welding at least one thermally weldable material according to an embodiment of the present disclosure, during operation of the device;
- Fig. 4: shows, in a schematic and perspective illustration, a device for thermally welding at least one thermally weldable material according to an embodiment of the present disclosure, during operation of the device;
- Fig. 5: shows, in a schematic and perspective illustration, a device for thermally welding at least one thermally weldable material according to an embodiment of the present disclosure, during operation of the device;
- Fig. 6: shows, in a schematic and perspective illustration, an applicator of any of the devices of Figs. 1 to 5;
- Fig. 7: shows a further schematic and perspective illustration of the applicator of Fig. 6;
- Fig. 8: shows a further schematic and perspective transparent illustration of the applicator of Figs. 6 and 7;
- Fig. 9: shows, in a schematic and perspective illustration, an applicator of any of the devices of Figs. 1 to 5;
- Fig. 10: shows a further schematic and perspective illustration of the applicator of Fig. 9;
- Fig. 11: shows a further schematic and perspective transparent illustration of the applicator of Figs. 9 and 10;
- Fig. 12: shows, in a schematic and perspective illustration, the applicator of any of the devices of Figs. 1 to 5;
- Fig. 13: shows a further schematic and perspective illustration of the applicator of Fig. 12;
- Fig. 14: shows a further schematic and perspective transparent illustration of the applicator of Figs. 12 and 13;
- Fig. 15: shows a further schematic and perspective illustration of the applicator of Figs. 12 to 14;
- Fig. 16: shows, in a schematic and perspective illustration, an adaptor for connecting an applicator to a heating device according to an embodiment of the present disclosure;
- Fig. 17: shows a further schematic and perspective illustration of the adaptor of Fig. 16;
- Fig. 18: shows, in a schematic and perspective cross-sectional view, the adaptor of Figs. 16 and 17.

### Detailed description of the drawings

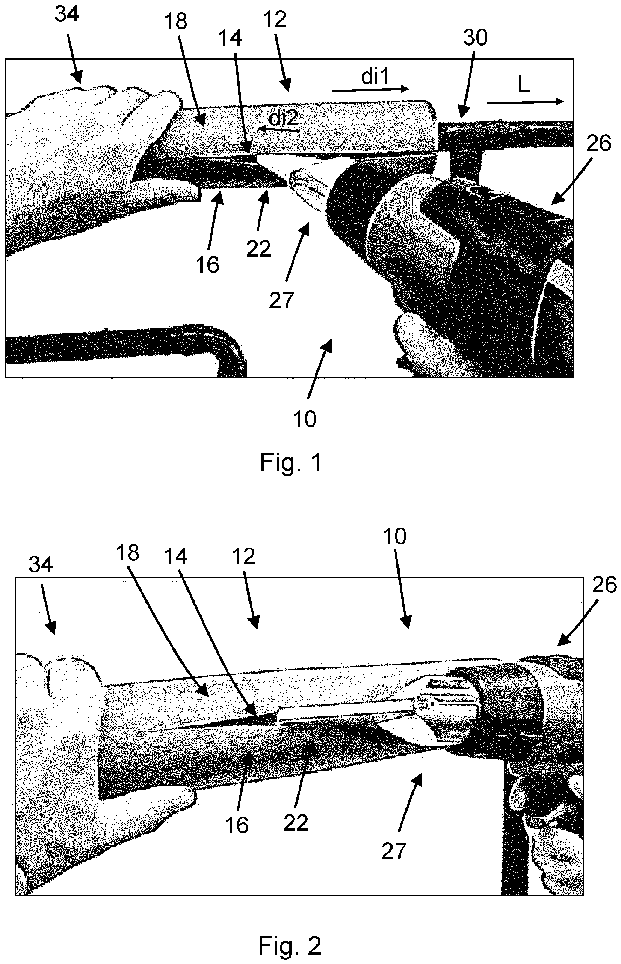

Fig. 1 shows, in a schematic and perspective illustration, a device 10 for thermally welding at least one thermally weldable material 12 during operation of the device 10. As schematically shown in Fig. 1, at least one gap 14 may be defined in at least a section of the material 12, in particular between at least two adjacent sections 16, 18 of the material 12. The device 10 may include at least one applicator 22 configured to be inserted at least partially into the gap 14, in particular between the adjacent sections 16, 18 of the material 12, during operation of the device 10.

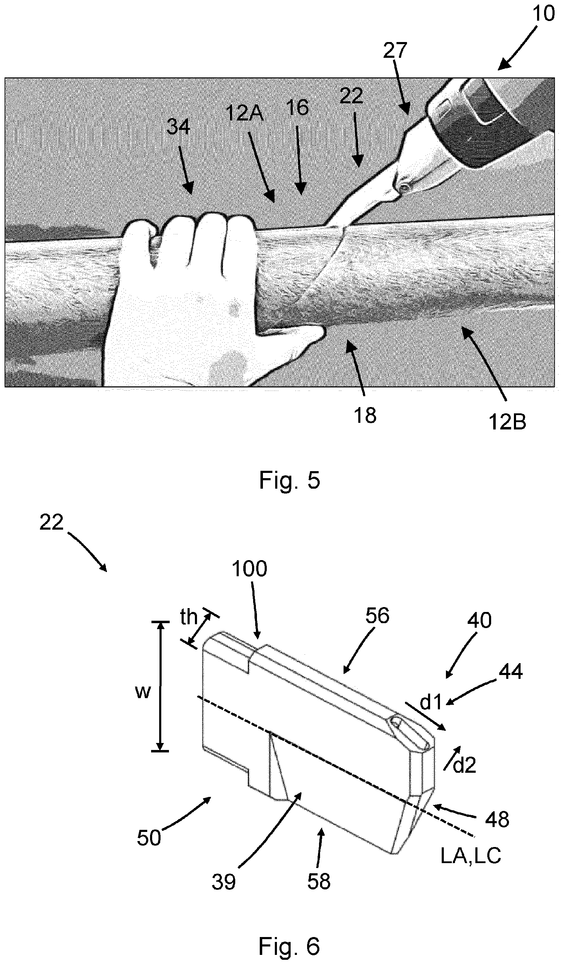

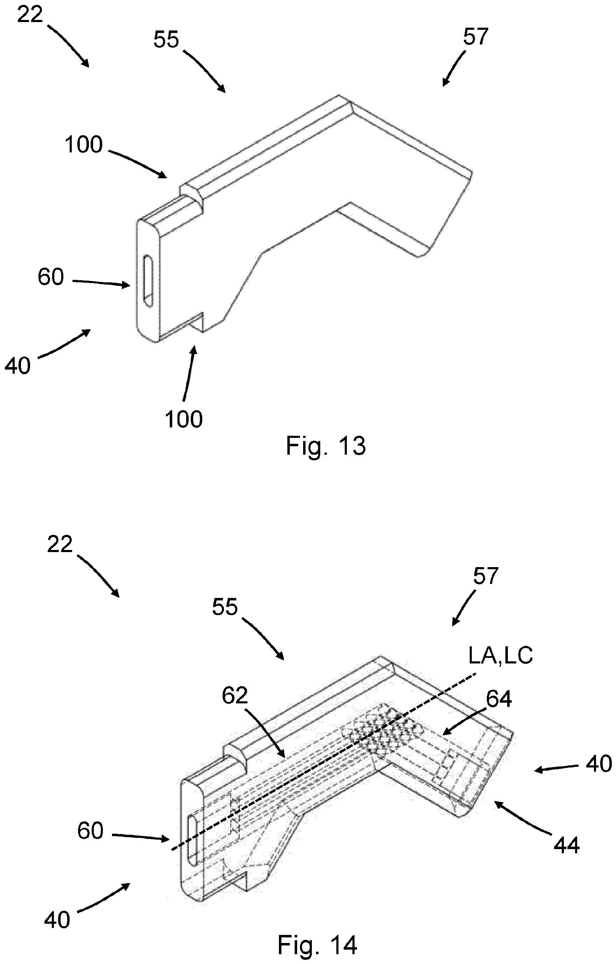

The applicator 22 may include at least one channel 40 (see Figs. 6 to 15) for guiding heated gas at least partially therethrough. The channel 40 may be configured to discharge the heated gas at least partially into the gap 14 to at least partially melt at least one of the adjacent sections 16, 18 of the material 12, in a state in which the applicator 22 is inserted at least partially between the adjacent sections 16, 18 of the material 12.

The device 10 may include at least one heating device 26 configured to heat the gas, such as a hot air gun (as shown in Figs. 1 to 5). The applicator 22 may be attached to and/or interconnected with the heating device 26 by means of at least one adapter 27.

The material 12 may be any type of thermally weldable material. Preferably, the material 12 is configured to cover at least a section of at least one pipe 30. The material 12 may be a thermal insulation material, in particular for thermally insulating the pipe 30. For instance, the thermally weldable material 12 may be configured as a tube which is made of a thermally insulating material, or which includes a thermally insulating material, e.g., foam. However, the thermally weldable material 12, within the context of the present disclosure, may be any type of material which is weldable by applying thermal energy.

The gap 14 may be provided to facilitate and/or allow installation of the material 12 by enabling the pipe 30 to pass through the gap 14, as the material 12 is placed over pipe 30. Once the material 12 is in place, it may be advantageous to close the gap 14 by at least partially bonding the adjacent sections 16, 18 of the material 12 which bound and/or define the gap 14. The adjacent sections 16, 18 of the material 12 may be part of a single piece of the material 12, i.e., a coherent piece of the material 12. The gap 14 may be an opening within the single piece of the material 12. For instance, the gap 12 may extend along a longitudinal axis L of the pipe 30, in a state in which the material 12 has been placed over the pipe 30, as shown in Figs. 1 and 2.

The device 10, more specifically the applicator 22, may be configured such that the applicator 22 may be inserted at least partially between the adjacent sections 16, 18 of the material 12 and moved at least partially along the gap 14, preferably along the longitudinal axis L of the pipe 30, while discharging the heated gas from the channel within the gap 14. The adjacent sections 16, 18 of the material 12 may be pressed together, preferably behind the applicator 22, preferably manually by a user's hand 34, such that the adjacent sections 16, 18 of the material 12 at least partially contact each other to facilitate welding/joining the adjacent sections 16, 18 of the material 12.

The device 10, more specifically the applicator 22, may be held and/or angled at different angles relative to the material 12, e.g., the gap 14, and/or the pipe 30, e.g., the longitudinal axis L of the pipe 30.

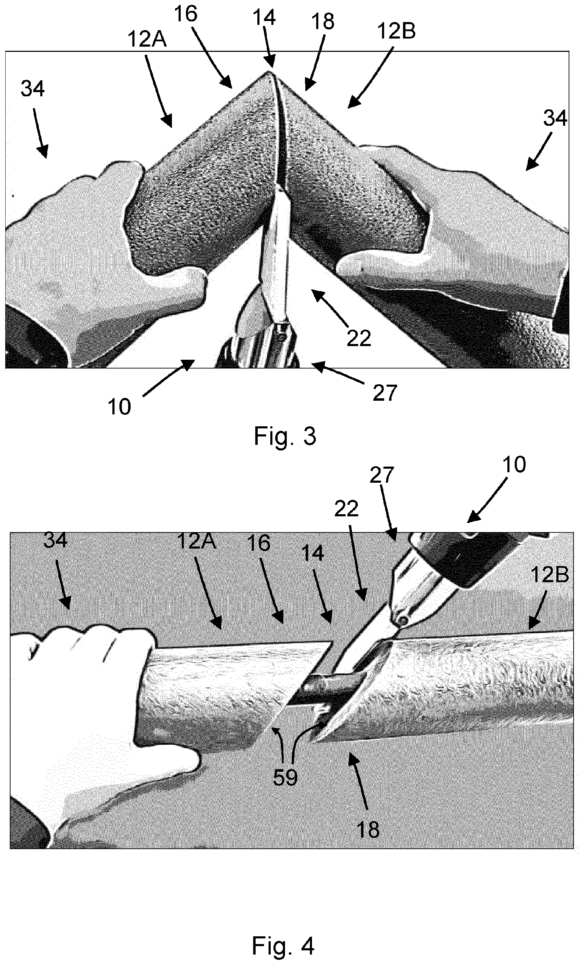

Alternatively, or additionally, the adjacent sections 16, 18 of the material 12 may be sections 16, 18 of at least two pieces of the material 12A, 12B which are arranged in series along the pipe 30 and/or at an angle greater than 0° to each other, as shown in Figs. 3 to 5.

The applicator 22 may be at least partially made of a material which prevents, or at least reduces, adhesion of the applicator 22 to the thermally weldable material 12, in a state in which the applicator 22 is inserted at least partially between the adjacent sections 16, 18 of the material 12. Alternatively, or additionally, the applicator 22 may include at least one coating which may be arranged at least partially on an outer surface 39 of the applicator 22. The coating may be configured to reduce adhesion of the applicator 22 to the thermally weldable material 12, in a state in which the applicator 22 is inserted at least partially between the adjacent sections 16, 18 of the material 12.

The applicator 22 may be configured to be moved at least partially along the gap 14 in a first direction di1, while the heated gas is being discharged from the channel 40 within the gap 14 in a second direction di2, in a state in which the applicator 22 is inserted at least partially in the gap 14.

The first direction di1 and the second direction di2 may be arranged with respect to each other at an angle in a range from 10° to 210°, preferably from 20° to 210°, more preferably from 30° to 210°, more preferably from 40° to 210°, more preferably from 50° to 210°, more preferably from 60° to 210°, more preferably from 60° to 210°, more preferably from 60° to 210°, more preferably from 150° to 210°, more preferably 150° to 200°, more preferably 150° to 190°.

Alternatively, or additionally, first direction di1 and the second direction di2 may be arranged with respect to each other at an angle of at least 10°, preferably at least 20°, more preferably at least 30°, more preferably at least 40°, more preferably at least 50°, more preferably at least 60°, more preferably at least 90°, more preferably at least 120°, more preferably at least 150°.

Alternatively, or additionally, first direction di1 and the second direction di2 may be arranged with respect to each other at an angle of 210° or less, preferably 200° or less, more preferably 190° or less, more preferably of 180° or less.

Figs. 6 to 14 show various configurations of the applicator 22. As described above, the applicator 22 may include at least one channel 40 for guiding the heated gas at least partially therethrough. The channel 40 may be configured to discharge the heated gas at least partially into the gap 14 to at least partially melt at least one of the adjacent sections 16, 18 of the material 12, in a state in which the applicator 22 is inserted at least partially between the adjacent sections 16, 18 of the material 12.

The channel 40 may include at least one gas outlet 44 through which the heated gas can be discharged from the applicator 22, in particular at least partially within and/or into the gap 14.

The channel 40 and the gas outlet 44 may have a variety of different configurations and/or arrangements, e.g., depending on the application, e.g., depending on the shape and/or dimensions of the material 12 and/or the gap 14 and/or the pipe 30. For instance, the gas outlet 44 may be arranged off-center, with respect to a longitudinal central axis LC of the applicator 22.

The gas outlet 44 may have a cross-section which extends in a first dimension d1 and a second dimension d2 which is substantially perpendicular to the first dimension d1. A ratio of the first dimension d1 to the second dimension d2 may range from 2 to 12, preferably from 2 to 11, more preferably from 2 to 10, more preferably from 2 to 9, more preferably from 2 to 8, more preferably from 2 to 7, more preferably from 2.5 to 7, more preferably from 3 to 7, more preferably from 3.5 to 7, more preferably from 4 to 7, more preferably from 4 to 6.5. In other words, the gas outlet 44 may have an elongate cross-sectional shape. The gas outlet 44 may have any cross-sectional shape, e.g., round, oval, rectangular, etc.

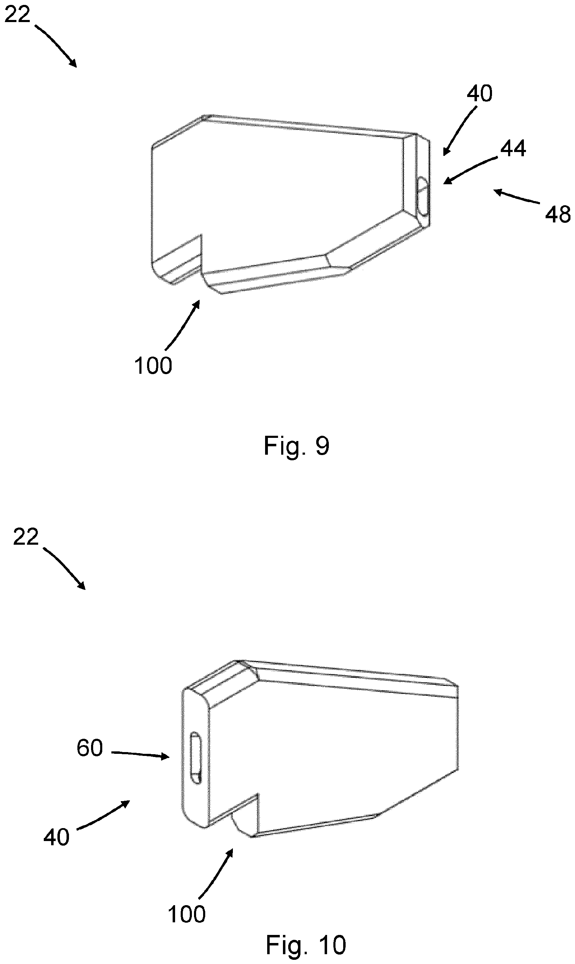

A distal end 48 of the applicator 22 may be free of any gas outlets. Alternatively, or additionally, at least one lateral side 50, 52, preferably both lateral sides 50, 52, of the applicator 22 may be free of any gas outlets (the lateral sides 50, 52 may also be referred to as first and second main surfaces in the context of the present invention, respectively). Instead, for instance, the gas outlet(s) 44 may be arranged on and/or along an trailing side 56 and/or a leading side 58 of the applicator 22. In other words, in the embodiment of Figs. 6 to 8, the heated gas may be discharged from the trailing side 56 and/or the leading side 58 of the applicator 22, rather than from the distal end 48 and/or the lateral sides 50, 52 of the applicator 22. In contrast, the embodiment of Figs. 9 to 11 features a gas outlet in the distal end 48. The trailing side 56 and the leading side 58 may also be referred to as first and second sections of a sidewall of the applicator in the context of the present invention, respectively.

The applicator 22 may have a thickness th and a width w. A ratio of the maximum width w to the maximum thickness th may range from 2 to 12, preferably from 2 to 11, more preferably from 2 to 10, more preferably from 2 to 9, more preferably from 2 to 8, more preferably from 2 to 7, more preferably from 2.5 to 7, more preferably from 3 to 7, more preferably from 3.5 to 7, more preferably from 4 to 7, more preferably from 4 to 6.5. The thickness th may refer to the greatest thickness of the applicator 22. The width w may refer to the greatest width of the applicator 22.

The thickness th may extend between the adjacent sections 16, 18 of the material 12, i.e., from one adjacent section 16 to or towards the other adjacent section 18, in a state in which the applicator 22 is inserted at least partially between the adjacent sections 16, 18 of the material 12. The width w may extend along the gap 14 between the adjacent sections 16, 18 of the material 12, in a state in which the applicator 22 is inserted at least partially between the adjacent sections 16, 18 of the material 12. In particular, the width w may extend substantially parallel to an interface 59 of one or both adjacent sections 16, 18 (see, e.g., Fig. 4) which at least partially defines and/or borders the gap 14, whereas the thickness th may extend substantially perpendicularly to the interface 59 of one or both adjacent sections 16, 18, in a state in which the applicator 22 is inserted at least partially between the adjacent sections 16, 18 of the material 12.

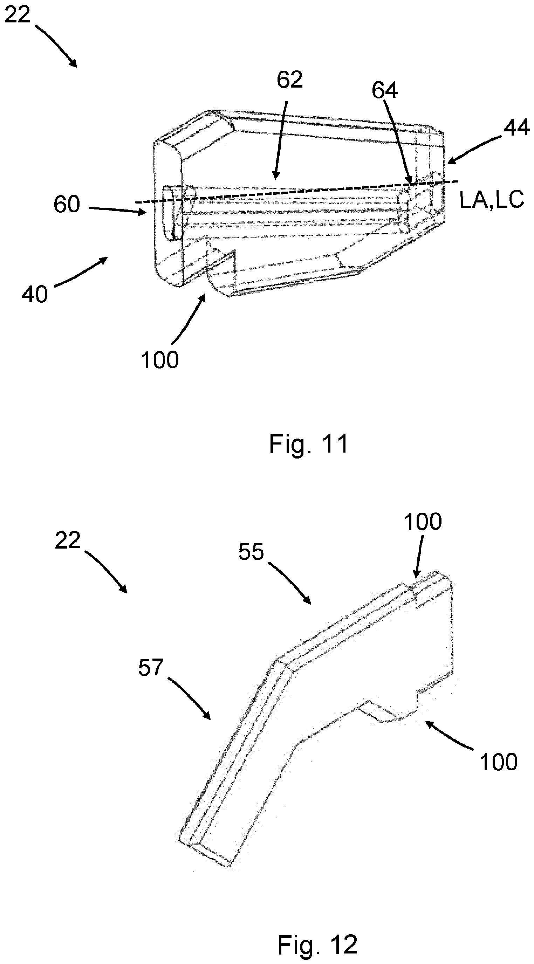

An outer contour and/or an outer shape of the applicator 22 may also be adapted and/or may vary, e.g., depending on the applicator. For instance, the applicator 22 may have at least two body sections 55, 57 which are angled and/or bent and/or curved relative to each other by an angle greater than 0° (see Figs. 12 to 14). This may facilitate guiding the applicator 22 into and/or along the gap 14 and/or may facilitate guiding, e.g., redirecting, the heated gas to a desired point of discharge from the applicator 22 within the gap 12.

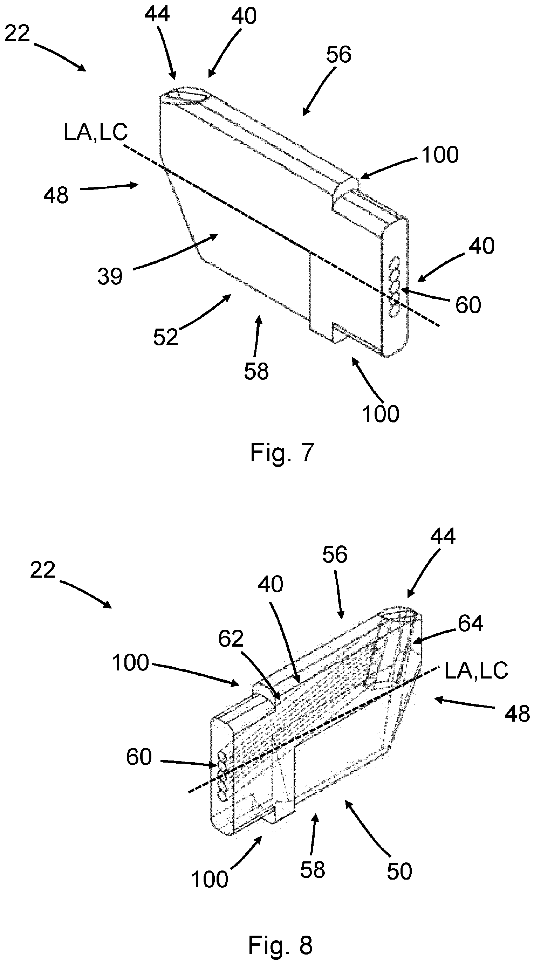

The channel 40 may include at least one gas inlet 60 configured to receive the heated gas, e.g., from the heating device 26. As shown in Figs. 8, 11, and 14, the channel 40 may be formed, along at least a portion thereof, by a plurality of cylindrical holes, which may extend parallel to each other. The holes may be drilled into the applicator 22. This may be advantageous for manufacturing purposes and allow to maximize the channel's overall cross-section while keeping the thickness th of the applicator 22 small, e.g. when materials that are challenging to process, like for example PEEK, are employed.

The channel 40 may be configured to redirect the heated gas within the channel 40. For instance, the channel 40 may be curved and/or angled at least a section of the channel 40 to redirect the heated gas within the channel 40. For instance, channel 40 shown in Figs. 6 to 8 is curved and/or angled to redirect the heated gas towards the upper side 56 of the applicator 22. The channel 40 may extend linearly or non-linearly through the applicator 22. In particular, the channel 40 may include at least two substantially straight sections 62, 64 which have different angles with respect to the longitudinal axis LA of the applicator 22, in particular to redirect the heated gas within the channel 40. The longitudinal central axis LC and the longitudinal axis LA of the applicator 22 may be identical or different. The longitudinal central axis LC and the longitudinal axis LA of the applicator 22 may coincide or extend parallel to each other.

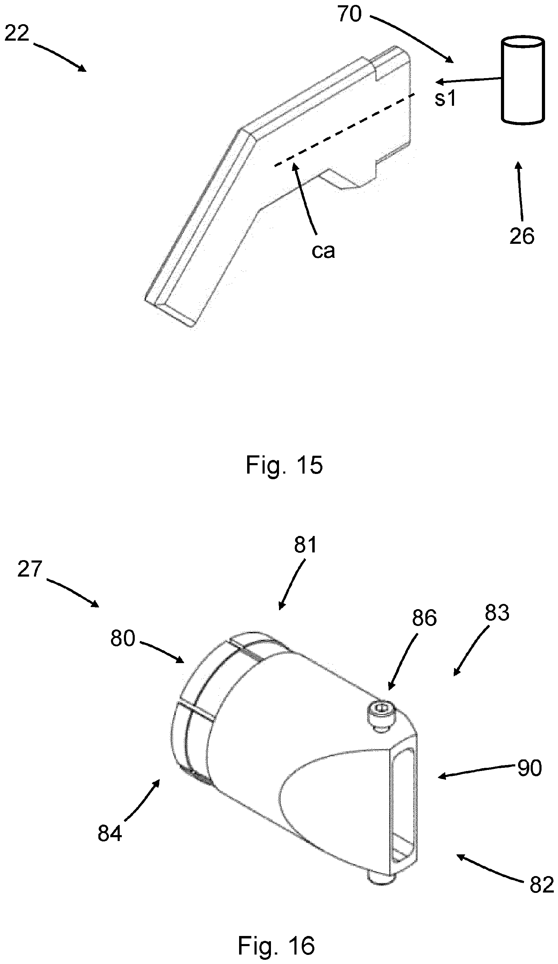

The heating device 26, which is schematically depicted in Fig. 15, may have an outlet 70 to which the applicator 22 is attached or attachable. The applicator 22 and the heating device 26 are depicted as being separated from each other in Fig. 15, which is only for illustrative purposes. The applicator 22 may be attached to the heating device 26. The outlet 70 may extend and/or may be configured to output a stream of the heated gas in a first direction s1. A central axis ca of at least a section of the channel 40, e.g., of at least a section of the channel 40 which is arranged adjacent to the outlet 70 and/or at least a section of the channel 40 which is separated from the outlet 70 (but fluidically connected to the outlet 70) by one or more further sections of the channel 40, may extend obliquely to said first direction s1. A central axis ca of at least a section of the channel 40 may extend to said first direction s1 at an angle of 10° to 110°, preferably by 10° to 100°, more preferably by 10° to 95°, more preferably by 15° to 95°, more preferably by 20° to 95°, more preferably by 25° to 95°, more preferably by 30° to 95°, more preferably by 35° to 95°. In other words, the applicator 22 may redirect a stream of the heated gas which exits the heating device 26 through the outlet 70 by at least one angle greater than 0°, e.g., according one or more the above-identified angles and/or angle ranges.

Figs. 16 to 18 show the adapter 27. The adapter 27 may include at least one adapter inlet 80 for receiving the heated gas, e.g., from the heating device 26, and at least one adapter outlet 82 configured to discharge the heated gas to the applicator 22. The adapter 27 may include at least one first connecting device 84, preferably arranged at a first end 81 of the adapter 27, and at least one second connecting device 86, preferably arranged at a second end 83 of the adapter 27 which may be arranged substantially opposite from the first end 81. The first connecting device 84 may be configured to fixedly connect the adapter 27 with the heating device 26. The second connecting device 86 may be configured to fixedly connect the adapter 27 with the applicator 22.

The first connecting device 84 and/or the second connecting device 86, preferably at least the second connecting device 86, may be configured as or may include a quick-release mechanism to provide a releasable attachment between the adapter 27 and the heating device 26 and/or the applicator 22, respectively, which may be released and/or connectably operated in a relatively easy manner, in particular without the use of tools. For instance, the first connecting device 84 and/or the second connecting device 86 may include, e.g., via at least one screw, e.g., at least one grub screw, at least one snap-fit connection, at least one screw thread, a frictional fit, at least one bayonet connection, at least one clamp, etc. The second connecting device 86 preferably includes one or more screws configured to releasably engage the applicator 22, in particular by screwing the one or more screws further onto or into the adapter 22, as a quick-release mechanism. The one or more screws may be at least partially unscrewed to release the applicator 22 from the adapter 27.

The adapter 27 may include at least one conduit 90 which may be fluidly connected and/or fluidly connectable to the channel 40 of the applicator 22 and/or the outlet 70 of the heating device 26. The conduit 90 may have a cross-sectional shape which is tapered (not depicted) in one or more directions of the cross-sectional shape, preferably along a downstream direction. The conduit 90 of the adapter 27 may be configured to adapt a flow of the heated gas from the heating device 26 to the applicator 22, e.g., by providing a transition from a cross-sectional shape of the outlet 70 of the heating device 26 to a cross-sectional shape of the applicator 22, in particular a cross-sectional shape of the gas inlet 60 of the applicator 22, and/or by adapting and/or adjusting a velocity of a flow of the heated gas.

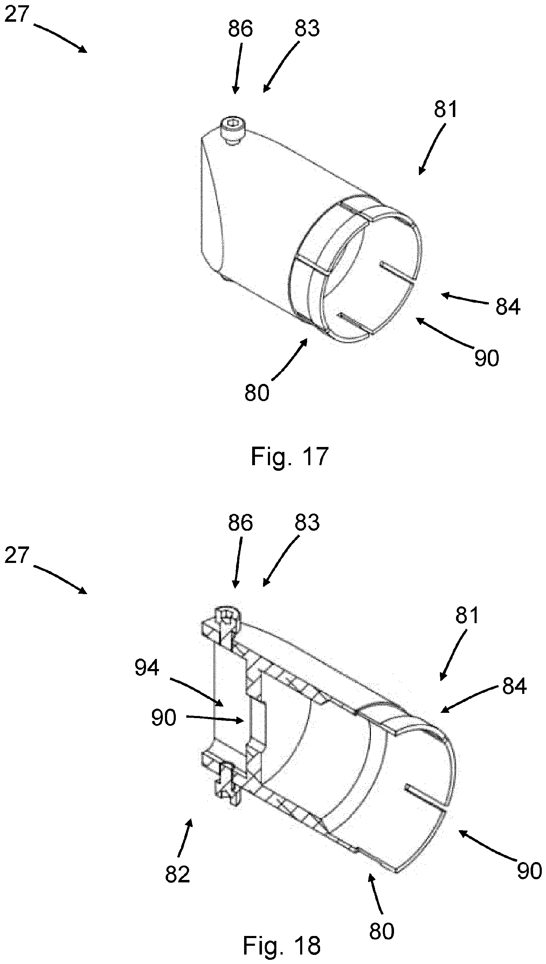

The adapter 27 may include at least one receiving section 94 (see Fig. 18) configured to at least partially receive at least a section of the applicator 22, in particular a proximal section of the applicator 22, to fixedly attach the applicator 22 to the adapter 27. The applicator 22 may include at least one stop device 100, e.g., at least one protrusion and/or recess and/or undercut, configured to engage with the adapter 27, e.g., to limit a degree of insertion of the applicator 22 into the adapter 27, more specifically the receiving section 94.

## Claims

1. A device (10) for thermally welding at least one thermally weldable material (12), including:
at least one heating device (26) configured to heat at least one gas; and
at least one applicator (22) configured to be inserted at least partially in at least one gap (14) between at least two adjacent sections (16, 18) of the material (12), during operation of the device (10);
wherein the applicator (22) includes at least one channel (40) for guiding the heated gas at least partially therethrough; and
wherein the channel (40) is configured to discharge the heated gas at least partially into the gap (14) to at least partially melt at least one of the adjacent sections (16, 18) of the material (12), in a state in which the applicator (22) is inserted at least partially between the adjacent sections (16, 18) of the material (12).

2. The device (10) according to claim 1, wherein the thermally weldable material (12) is a thermally insulating material and/or a foam, preferably a foam made from thermoplastic polymers, thermoplastic elastomers, bio-based and bio-sourced thermoplastics, preferably obtained from bio-based monomers, and mixtures thereof.

3. The device (10) according to claim 1 or 2, wherein:
- the channel (40) is configured to redirect the heated gas within the channel (40); and/or
- the channel (40) has a substantially linear shape, wherein the channel (40) is angled with respect to a longitudinal axis of the applicator (22) by 0° to 180°, preferably by 10° to 160°, more preferably by 10° to 140°, more preferably by 10° to 120°, preferably by 10° to 100°, more preferably by 10° to 95°, more preferably by 15° to 95°, more preferably by 20° to 95°, more preferably by 25° to 95°, more preferably by 30° to 95°, more preferably by 35° to 95°; and/or
- the channel (40) extends non-linearly through the applicator (22), preferably wherein the channel (40) includes at least two substantially straight sections (62, 64) which have different angles with respect to the longitudinal axis (LA) of the applicator (22); and/or
- the channel (40) has at least one curved section; and/or
- wherein the heating device (26) has an outlet (70) to which the applicator (22) is attached, wherein the outlet (70) extends and/or is configured to output a stream of the heated gas in a first direction (s1), wherein a central axis (ca) of at least a section of the channel (40) extends obliquely to said first direction (s1), preferably wherein a central axis (ca) of at least a section of the channel (40) extends to said first direction (s1) at an angle of 10° to 110°, preferably by 10° to 100°, more preferably by 10° to 95°, more preferably by 15° to 95°, more preferably by 20° to 95°, more preferably by 25° to 95°, more preferably by 30° to 95°, more preferably by 35° to 95°.

4. The device (10) according to any of the preceding claims, wherein the channel (40) includes a gas outlet (44) through which the heated gas can be discharged, preferably wherein the gas outlet (44) is arranged off-center, with respect to a longitudinal central axis (LC) of the applicator (22).

5. The device (10) according to claim 4, wherein the gas outlet (44) has a cross-section which extends in a first dimension (d1) and a second dimension (d2) which is substantially perpendicular to the first dimension (d1), wherein a ratio of the first dimension (d1) and the second dimension (d2) ranges from 2 to 12, preferably from 2 to 11, more preferably from 2 to 10, more preferably from 2 to 9, more preferably from 2 to 8, more preferably from 2 to 7, more preferably from 2.5 to 7, more preferably from 3 to 7, more preferably from 3.5 to 7, more preferably from 4 to 7, more preferably from 4 to 6.5.

6. The device (10) according to any of the preceding claims, wherein the applicator (22) has a thickness (th) which extends between the adjacent sections (16, 18) of the material (12) and a width (w) which extends along the gap (14) between the adjacent sections (16, 18) of the material (12), in a state in which the applicator (22) is inserted at least partially between the adjacent sections (16, 18) of the material (12), wherein a ratio of the width (w) to the thickness (th) ranges from 2 to 12, preferably from 2 to 11, more preferably from 2 to 10, more preferably from 2 to 9, more preferably from 2 to 8, more preferably from 2 to 7, more preferably from 2.5 to 7, more preferably from 3 to 7, more preferably from 3.5 to 7, more preferably from 4 to 7, more preferably from 4 to 6.5.

7. The device (10) according to any of the preceding claims, wherein:
the applicator (22) is at least partially made of a material which prevents, or at least reduces, adhesion of the applicator (22) to the thermally weldable material (12), in a state in which the applicator (22) is inserted at least partially between the adjacent sections (16, 18) of the material (12); and/or
the applicator (22) includes at least one coating which is arranged at least partially on an outer surface (39) of the applicator (22), wherein the coating is configured to reduce adhesion of the applicator (22) to the thermally weldable material (12), in a state in which the applicator (22) is inserted at least partially between the adjacent sections (16, 18) of the material (12).

8. The device (10) according to any of the preceding claims, wherein, in a state in which the applicator (22) is inserted at least partially between the adjacent sections (16, 18) of the material (12), the applicator (22) is configured to abut at least one pipe (30) arranged at least partially within the thermally weldable material (12), while discharging the heated gas along at least a section of the gap (14).

9. The device (10) according to any of the preceding claims, wherein, in the abutted state, the applicator (22) is configured to discharge the heated gas substantially parallel to a longitudinal axis of the pipe (30) and/or substantially tangentially to a circumference of the pipe (30).

10. The device (10) according to any of the preceding claims, wherein the applicator is configured to be moved at least partially along the gap (14) in a first direction (di1), in a state in which the applicator (22) is inserted at least partially in the gap (14) and the heated gas is being discharged from the channel (40) within the gap (14) in a second direction (di2), wherein the first direction (di1) and the second direction (di2) are arranged with respect to each other at an angle
- in a range from 10° to 210°, preferably from 20° to 210°, more preferably from 30° to 210°, more preferably from 40° to 210°, more preferably from 50° to 210°, more preferably from 60° to 210°, more preferably from 60° to 210°, more preferably from 60° to 210°, more preferably from 150° to 210°, more preferably 150° to 200°, more preferably 150° to 190°; and/or
- of at least 10°, preferably at least 20°, more preferably at least 30°, more preferably at least 40°, more preferably at least 50°, more preferably at least 60, more preferably at least 90°, more preferably at least 120°, more preferably at least 150°; and/or
- of 210° or less, preferably 200° or less, more preferably 190° or less, more preferably of 180° or less.

11. The device (10) according to any of the preceding claims, wherein the applicator (22) is configured to at least partially contact the thermally weldable material (12), in particular at least one of the adjacent sections (16, 18) of the thermally weldable material (12), in a state in which the applicator (22) is inserted at least partially in the gap (14) and the heated gas is being discharged from the channel (40) within the gap (14).

12. A kit including the device (10) according to any of the preceding claims and a plurality of the at least one applicator (22), wherein the plurality of applicators are interchangeably mountable to the device (10).

13. A method for thermally welding at least one thermally weldable material (12), including:
providing a device (10) for thermally welding the least one thermally weldable material (12), the device (10) including at least one heating device (26) configured to heat at least one gas and at least one applicator (22) which includes at least one channel (40) for guiding the heated gas at least partially therethrough:
inserting the applicator (22) at least partially in at least one gap (14) between at least two adjacent sections (16, 18) of the material (12);
discharging the heated gas from the channel (40) at least partially into the gap (14) to at least partially melt at least one of the adjacent sections (16, 18) of the material (12), in a state in which the applicator (22) is inserted at least partially between the adjacent sections (16, 18) of the material (12); and
joining the adjacent sections of the material (12).

14. The method according to claim 13, wherein the heated gas is discharged substantially parallel to a longitudinal axis of the pipe (30) and/or substantially tangentially to a circumference of the pipe (30).

15. The method according to claim 13 to 14, wherein the applicator (22) is moved at least partially along the gap (14) in a first direction, in a state in which the applicator (22) is inserted at least partially in the gap (14), and the heated gas is being discharged from the channel (40) within the gap (14) in a second direction, wherein the first direction and the second direction are arranged with respect to each other at an angle:
- in a range from 10° to 210°, preferably from 20° to 210°, more preferably from 30° to 210°, more preferably from 40° to 210°, more preferably from 50° to 210°, more preferably from 60° to 210°, more preferably from 90° to 210°, more preferably from 120° to 210°, more preferably from 150° to 210°, more preferably 150° to 200°, more preferably 150° to 190°; and/or
- of at least 10°, preferably at least 20°, more preferably at least 30°, more preferably at least 40°, more preferably at least 50°, more preferably at least 60, more preferably at least 90°, more preferably at least 120°, more preferably at least 150°; and/or
- of 210° or less, preferably 200° or less, more preferably 190° or less, more preferably of 180° or less.
